# EUROPÄISCHE PATENTSCHRIFT

(11) **EP 3 708 421 B1**
(45) Veröffentlichungstag und Bekanntmachung des Hinweises auf die Patenterteilung: **10.08.2022**
(21) Anmeldenummer: 20163078.7
(22) Anmeldetag: 13.03.2020
(51) Int. Cl.: B60N 2/28

(54) **HÖHENVERSTELLEINRICHTUNG EINER KOPFSTÜTZE EINES KINDERSITZES**
HEIGHT ADJUSTING DEVICE FOR A HEADREST OF A CHILD SEAT
DISPOSITIF DE RÉGLAGE EN HAUTEUR D'UN APPUI-TÊTE D'UN SIÈGE AUTO

(30) Priorität: 13.03.2019 DE 102019106459
(43) Veröffentlichungstag der Anmeldung: 16.09.2020
(73) Patentinhaber: Avova GmbH, 89077 Ulm (DE)
(72) Erfinder: Held, Manfred Ulrich, 89165 Dietenheim (DE)
(74) Vertreter: Meyer, Thorsten

(56) Entgegenhaltungen:
- EP-A2- 1 621 395
- CN-U- 205 010 037
- DE-A1-102013 107 533

## Beschreibung

Die Erfindung betrifft einen Kindersitz mit einer Höhenverstelleinrichtung einer Kopfstütze wobei die Kopfstütze einen oberen Kopfteil einer Rückenlehne des Kindersitzes für Kraftfahrzeuge bildet.

In Kindersitzen und deren Rückenlehnen, in welchen Kopfstützen mit Gurtführungen integriert sind, ist es unabdingbar, die Kopfstütze, in welcher die Schultergurtführung für den Fahrzeuggurt integriert ist und die somit für den korrekten Gurtverlauf des fahrzeugeigenen Automatikdreipunktgurtes am kindlichen Körper dient, diese individuell auf die entsprechende Körpergröße des Kindes einzustellen.

Beim Stand der Technik werden dabei sehr komplizierte und aufwändige Lösungen vorgeschlagen. So zeigt beispielsweise die EP 2607153 A1 ein komplexes System in dem viele Teile ineinander greifen müssen um eine Verstellung und Arretierung zu ermöglichen. In der DE 103 06 341 B4 ist ein System gezeigt, dass mit mehreren Federn arbeiten muss bei dem es zu Sperrungen kommen kann.

Aus der EP 1 621 395 A2 ist ein Fahrzeugkindersitz, an Kinderwachstum anpassbar, bekannt, bei dem eine Rückenlehne mit einer Kopfstütze und Seitenteilen versehen ist, die über den Sitzteil hinausragen, wobei die Seitenteile seitlich beweglich sind und voneinander beabstandet werden können, um den Nutzraum zum Halten des Kindes auf dem Sitz zu vergrößern, wobei die Kopfstütze relativ zum Sitzteil mit einer von den Seitenteilen unabhängigen Bewegung beweglich ist, die es ermöglicht, die Größe der Rückenlehne an die Größe des Kindes anzupassen. Rückenlehne an das Wachstum des Kindes angepasst werden kann.

Aus der CN205010037U ist eine Kopfteilverstellung bekannt, bei der über eine Auslöseeinheit Sperrelemente, die in Ausnehmungen eingreifen, freigegeben werden können.

Aufgabe der Erfindung ist es einen Kindersitz mit einer verbesserten Höhenverstelleinrichtung einer Kopfstütze einer Rückenlehne des Kindersitzes für Kraftfahrzeuge zur Verfügung zu stellen, bei der die Position leichtgängig einstellbar ist und wenig Teile zum Einsatz kommen.

Diese Aufgabe wird durch eine Höhenverstelleinrichtung einer Kopfstütze nach den Merkmalen des Anspruchs 1 gelöst.

Erfindungsgemäß ist ein Kindersitz mit einer Höhenverstelleinrichtung mit den Merkmalen des Anspruchs 1.

Der Verstellmechanismus ermöglicht auf besonders effektive Weise durch die Betätigung der Hauptführung mittels der Hand, welche eine Zugbewegung (am Verstellgriff) durchführt, die Verriegelungsbolzen zu entriegeln, um im folgenden Ablauf die Adjustierung der Kopfstütze in die gewünschte Position zu bringen.

Der Verstellmechanismus ist von Vorteil durch eine Feder vorgespannt. Durch diese Vorspannung werden die Verriegelungsbolzen, welche an den Führungsgleitern befestigt sind und sich auf der schiefen Ebene des Verstellmechanismus in Richtung vertikal nach oben beim Verstellen bewegen, dadurch gezwungen, den Verriegelungsmechanismus zu öffnen.

Vorteil gegenüber dem Stand der Technik ist dabei auch, dass nur eine einzige Feder zum Einsatz kommt und die Anzahl der Teile geringer ist.

Nun ist eine freie Positionierung ermöglicht, um danach lediglich den Verstellgriff loszulassen, um anschließend wieder zu verriegeln.

Ein Verstellen der Kopfstütze durch die Gleitstücke mit der schiefen Ebene macht das Bewegen der Rastbolzen und damit der Kopfstütze besonders leichtgängig und ist auch auf Grund der nur wenigen verbauten Teile kontengünstiger als andere Lösungen.

Bevorzugterweise sind die Sperrelement-Zwangsführungen gegenüberliegend angeordneten Sperrelemente symmetrisch ausgebildet.

Es hat sich bewährt, dass die Sperrelemente durch Bolzen ausgebildet sind. Dies stellt eine sehr sichere Fixierung bereit.

Zur komfortablen Einstellung ist nach einer weiteren Ausgestaltung vorgesehen, dass am oberen, der Kopfstütze zugewandten Ende der Auslöseeinheit ein Eingriff vorgesehen ist, vermittels welchem die Auslöseeinheit nach oben gezogen werden kann, was das Kopfteil zusammen im Griff mit der Auslöseeinheit gegenüber dem unteren Teil der Lehne beweglich macht.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Ansicht einer erfindungsgemäßen geöffneten Höhenverstelleinrichtung einer Kopfstütze eines Kindersitzes im verriegelten, arretierten Zustand,
- Fig. 2: eine schematische Ansicht des Kindersitzes aus Fig. 1 im entriegelten Zustand, und
- Fig. 3: eine schematische Detaildarstellung des Eingreifens der Sperrelemente und der Arretiervorrichtung.

Die in den Figuren gleichen Bezugsziffern bezeichnen gleiche oder gleich wirkende Elemente.

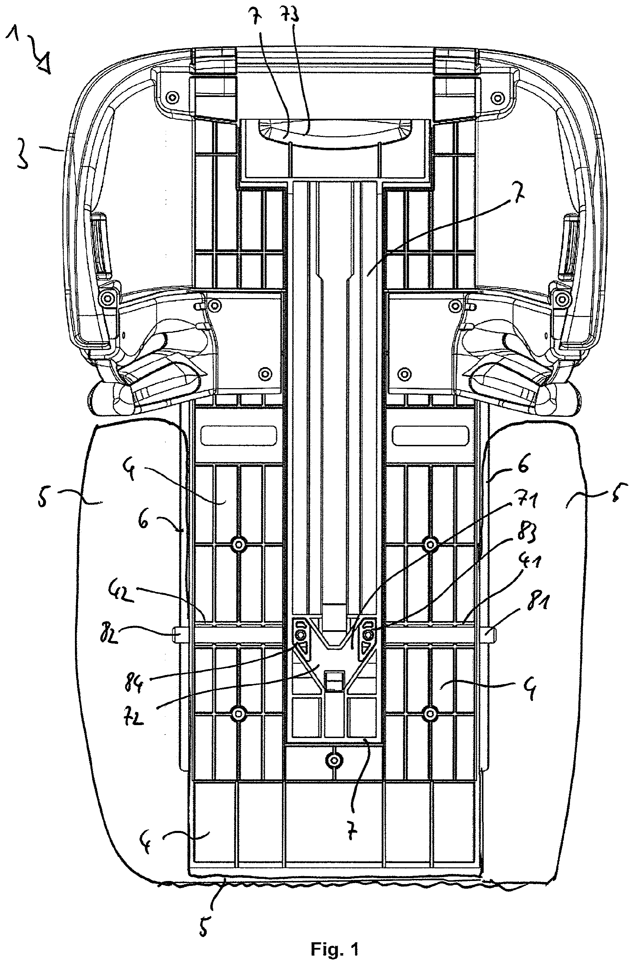

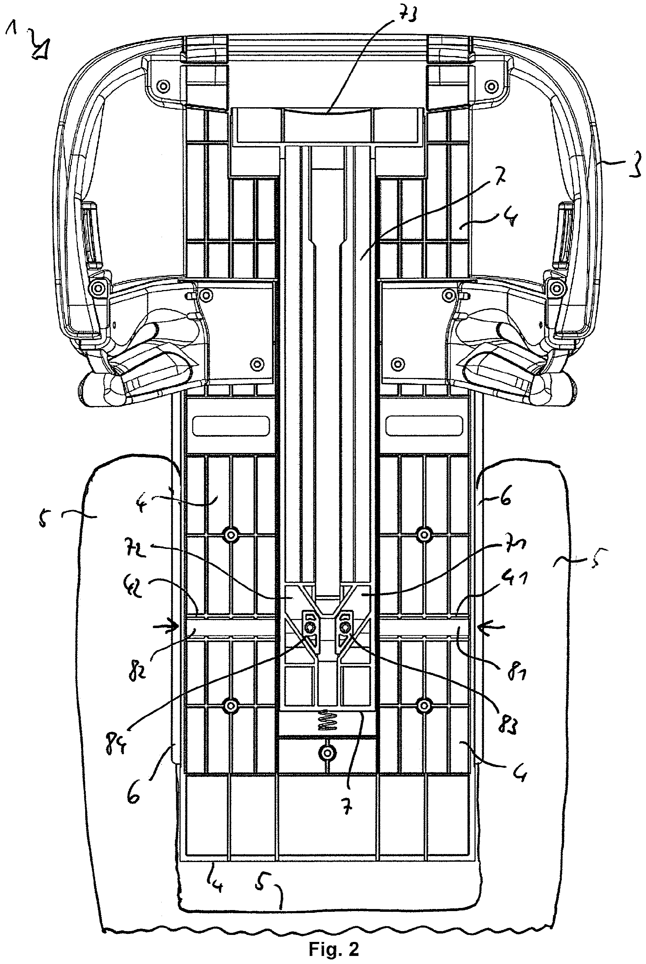

In Fig. 1 und 2 ist die Höhenverstelleinrichtung einer Kopfstütze 3 gemäß der Erfindung in einer gesperrten (Fig. 1) Stellung in einer entriegelten Stellung (Fig. 2) gezeigt.

Die Kopfstütze 3 bildet dabei einen oberen Kopfteil 4 einer Rückenlehne 4, 5 eines Kindersitzes 1 für Kraftfahrzeuge. Der Kopfteil 4 ist gegenüber einem unteren ortsfesten Teil 5 der Rückenlehne verschieblich angeordnet an dem unteren ortsfesten Teil 5 der Rückenlehne 4, 5 in einer Zwangsführung 6 geführt.

Zur Festlegung des Kopfteils ist eine Arretiervorrichtung 7, 81, 82 zur Sperrung der Beweglichkeit des Kopfteils 4 gegenüber dem unteren ortsfesten Teil 5 der Rückenlehne vorgesehen.

Die Arretiervorrichtung 7, 81, 82 ist durch eine an dem Kopfteil 4 gelagerte Auslöseeinheit 7 und mit der Arretiervorrichtung 7, 81, 82 zusammenwirkende Sperrelemente 81, 81 ausgebildet.

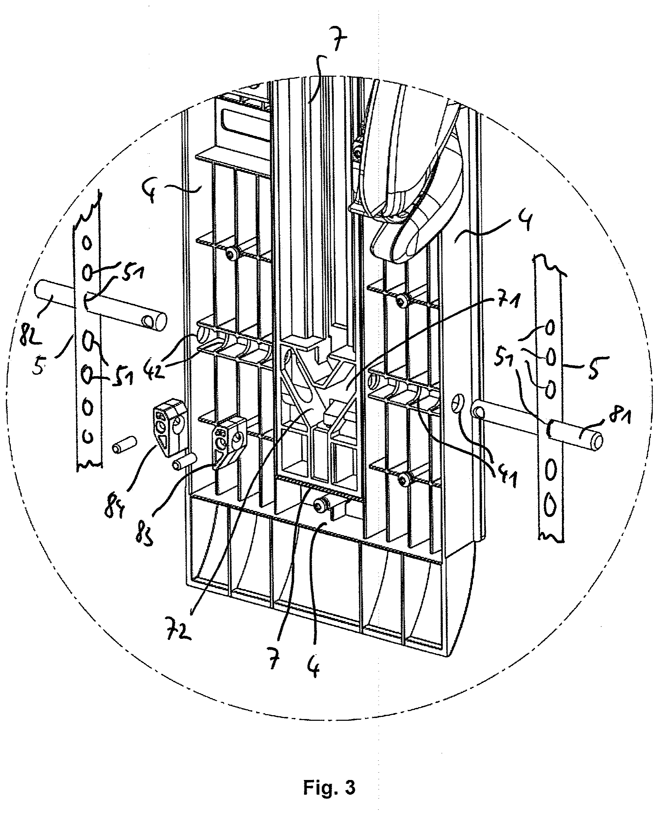

Die im Beispiel als Bolzen ausgebildeten Sperrelemente 81, 82 sind senkrecht zur durch die Zwangsführung 6 möglichen Bewegung des Kopfteils 4 gegen das untere ortsfeste Teil 5 der Rückenlehne in dem Kopfteil 4 zwangsgeführt 41, 42 und so in entlang der Zwangsführung 6 angeordnete Ausnehmungen 51 (siehe auch Fig. 3) im unteren ortsfesten Teil 5 der Rückenlehne eingreifen und eine Bewegung des Kopfteils 4 gegenüber dem unteren Teil 5 sperren können, wobei die Sperrelemente 81, 82 an der Auslöseeinheit 7 in einer Sperrelement-Zwangsführung 71, 72 geführt sind.

Die symmetrisch ausgeführte Sperrelement-Zwangsführung 71, 72 der beiden Sperrelemente 81, 82 ist jeweils durch ein schräg zur möglichen Bewegungsrichtung des Kopfteils 4 und schräg zur möglichen Bewegungsrichtung des Sperrelements 81, 82 verlaufendes Langloch ausgebildet, in das ein Fortsatz am Sperrelement 81, 82 eingreift.

Des weiteren ist die Sperrelement-Zwangsführung 71, 72 durch einen Kanal mit planparallelen gegenüberliegenden Flächen als schiefen Ebenen ausgebildet, in welchem die als Laufglieder 83, 84 mit zu den Flächen korrespondierenden Gegenflächen an den Enden der Sperrelemente 81, 82 ausgebildeten Fortsätze im Formschluss in der Sperrelement-Zwangsführung 71, 72 gleiten können.

### Bezugszeichenliste

- 1: Kindersitz
- 3: Kopfstütze
- 4: oberer Kopfteil der Rückenlehne
- 5: unterer Teil der Rückenlehne
- 51: Ausnehmung
- 6: Zwangsführung
- 7: Auslöseeinheit
- 71,71: Sperrelement-Zwangsführung
- 73: Eingriff
- 7,81,82: Arretiervorrichtung
- 81,82: Sperrelement
- 83,84: Laufglied

## Patentansprüche

1. Kindesitz mit einer Höhenverstelleinrichtung einer Kopfstütze (3) wobei die Kopfstütze (3) einen oberen Kopfteil (4) einer Rückenlehne (4, 5) des Kindersitzes (1) für Kraftfahrzeuge bildet,
wobei der Kopfteil (4) gegenüber einem unteren ortsfesten Teil (5) der Rückenlehne verschieblich angeordnet ist,
wobei der Kopfteil (4) an dem unteren ortsfesten Teil (5) der Rückenlehne (4, 5) in einer Zwangsführung (6) geführt ist,
wobei eine Arretiervorrichtung (7, 81, 82) zur Sperrung der Beweglichkeit des Kopfteils (4) gegenüber dem unteren ortsfesten Teil (5) der Rückenlehne vorgesehen ist,
wobei die Arretiervorrichtung (7, 81, 82) durch eine an dem Kopfteil (4) gelagerte Auslöseeinheit (7) und mit der Arretiervorrichtung (7, 81, 82) zusammenwirkende Sperrelemente (81, 81) ausgebildet ist,
wobei die Sperrelemente (81, 82) senkrecht zur durch die Zwangsführung (6) möglichen Bewegung des Kopfteils (4) gegen das untere ortsfeste Teil (5) der Rückenlehne in dem Kopfteil (4) zwangsgeführt (41, 42) sind und so in entlang der Zwangsführung (6) angeordnete Ausnehmungen (51) im unteren ortsfesten Teil (5) der Rückenlehne eingreifen und eine Bewegung des Kopfteils (4) gegenüber dem unteren Teil (5) sperren können,
wobei
wobei die Sperrelemente (81, 82) an der Auslöseeinheit (7) in einer Sperrelement-Zwangsführung (71, 72) geführt sind,
wobei die Sperrelement-Zwangsführung (71, 72) eines Sperrelements (81, 82) durch jeweils ein schräg zur möglichen Bewegungsrichtung des Kopfteils (4) und schräg zur möglichen Bewegungsrichtung des Sperrelements (81, 82) verlaufenden Kanal ausgebildet ist, in das ein Fortsatz am Sperrelement (81, 82) eingreift,
wobei der Kanal der Sperrelement-Zwangsführung (71, 72) mit planparallelen gegenüberliegenden Flächen als schiefen Ebenen ausgebildet ist, in welchem die als Laufglieder (83, 84) mit zu den Flächen korrespondierenden planparallelen Gegenflächen an den Enden der Sperrelemente (81, 82) ausgebildeten Fortsätze im Formschluss in der Sperrelement-Zwangsführung (71, 72) gleiten können.

2. Kindersitz mit einer Höhenverstelleinrichtung einer Kopfstütze des Kindersitzes für Kraftfahrzeuge nach Anspruch 1,
**dadurch gekennzeichnet,**
**dass** die Sperrelement-Zwangsführungen (71, 72) der gegenüberliegend angeordneten Sperrelemente (81, 82) symmetrisch ausgebildet sind.

3. Kindersitz mit einer Höhenverstelleinrichtung einer Kopfstütze des Kindersitzes für Kraftfahrzeuge nach einem der Ansprüche 1 oder 2, **dadurch gekennzeichnet,**
**dass** die Sperrelemente (81, 82) durch Bolzen ausgebildet sind.

4. Kindersitz mit einer Höhenverstelleinrichtung einer Kopfstütze des Kindersitzes für Kraftfahrzeuge nach einem der Ansprüche 1 bis 3, **dadurch gekennzeichnet,**
**dass** am oberen, der Kopfstütze (3) zugewandten Ende der Auslöseeinheit (7) ein Eingriff (73) vorgesehen ist, vermittels welchem die Auslöseeinheit (7) nach oben gezogen werden kann, was das Kopfteil (4) zusammen im Griff mit der Auslöseeinheit (7) gegenüber dem unteren Teil (5) der Lehne beweglich macht.

## Claims

1. Child seat with a height adjustment device for a headrest (3), the headrest (3) forming an upper head portion (4) of a backrest (4, 5) of the child seat (1) for motor vehicles, the head portion (4) being displaceably arranged with respect to a lower fixed portion (5) of the backrest,
wherein the head portion (4) is guided at the lower fixed portion (5) of the backrest (4, 5) within a positive guide (6), a locking device (7, 81, 82) being provided for locking the displacement of the head portion (4) with respect to the lower fixed portion (5) of the backrest,
wherein the locking device (7, 81, 82) being formed by an actuation unit (7) positioned at the head portion (4) and by locking members (81, 81) cooperating with the locking device (7, 81, 82),
wherein the locking members (81, 82) are positively guided (41, 42) perpendicularly to the displacement of the head portion (4) allowed by positive guide (6) towards the lower fixed portion (5) of the backrest in the head portion (4) and may thus engage with recesses (51) positioned along the positive guide (6) within the lower fixed portion (5) of the backrest and may lock a displacement of the head portion (4) with respect to the lower portion (5),
wherein the locking members (81, 82) is guided at the actuation unit (7) within a positive locking member guide (71, 72),
the positive locking member guide (71, 72) of a locking member (81, 82) is formed by a respective channel extending obliquely to the possible direction of motion of the head portion (4) and obliquely to the possible direction of motion of the locking element (81, 82), which an extension on the locking element (81, 82) engages in,
the channel of the positive locking member guide (71, 72) is formed with plane-parallel opposite surfaces as inclines, where the extensions being formed as runners (83, 84) having, at the ends of the locking elements (81, 82), plane-parallel counter-surfaces corresponding to said surfaces are able to glide form-fittingly within the positive locking member guide (71, 72).

2. Child seat with a height adjusting device for a headrest of the child seat for motor vehicles according to claim 1,
**characterized in that**
the positive locking member guides (71, 72) of the locking members (81, 82) located on opposite sides are formed in symmetric fashion.

3. Child seat with a height adjusting device for a headrest of the child seat for motor vehicles according to any one of claims 1 or 2,
**characterized in that**
the locking members (81, 82) are formed by bolts.

4. Child seat with a height adjusting device for a headrest of the child seat for motor vehicles according to any one of claims 1 to 3,
**characterized in that**
a handle (73) is provided at the upper end of the actuation unit (7) facing the headrest (3) by means of which the actuation unit (7) may be pulled upwards, which allows the head portion (4), grasped together with the actuation unit (7), to be displaced with respect to the lower portion (5) of the backrest.

## Revendications

1. Siège auto enfant avec un dispositif de réglage en hauteur d'un appuie-tête (3), dans lequel l'appuie-tête (3) forme une partie de tête supérieure (4) d'un dossier (4, 5) du siège auto enfant (1) pour véhicules automobiles,
dans lequel la partie de tête (4) est disposée de manière coulissante par rapport à une partie inférieure fixe (5) du dossier,
dans lequel la partie de tête (4) est guidée sur la partie inférieure fixe (5) du dossier (4, 5) dans un guidage forcé (6),
dans lequel un dispositif d'arrêt (7, 81, 82) est prévu pour le blocage de la mobilité de la partie de tête (4) par rapport à la partie inférieure fixe (5) du dossier,
dans lequel le dispositif d'arrêt (7, 81, 82) est réalisé par un module de déclenchement (7) logé sur la partie de tête (4) et avec des éléments de blocage (81, 81) coopérant avec le dispositif d'arrêt (7, 81, 82),
dans lequel les éléments de blocage (81, 82) sont guidés de manière forcée (41, 42) perpendiculairement au mouvement de la partie de tête (4) possible par le guidage forcé (6) contre la partie inférieure fixe (5) du dossier dans la partie de tête (4), et s'engrènent ainsi dans des évidements (51) disposés le long du guidage forcé (6) dans la partie inférieure fixe (5) du dossier et peuvent bloquer un mouvement de la partie de tête (4) par rapport à la partie inférieure (5),
dans lequel
dans lequel les éléments de blocage (81, 82) sont guidés sur le module de déclenchement (7) dans un guidage forcé d'élément de blocage (71, 72),
dans lequel le guidage forcé d'élément de blocage (71, 72) d'un élément de blocage (81, 82) est réalisé par à chaque fois un canal s'étendant en biais par rapport à la direction de mouvement possible de la partie de tête (4) et en biais par rapport à la direction de mouvement possible de l'élément de blocage (81, 82), dans lequel s'engrène un prolongement sur l'élément de blocage (81, 82), dans lequel le canal du guidage forcé d'élément de blocage (71, 72) est réalisé avec des faces opposées planes et parallèles en tant que plans en biais, dans lequel les prolongements réalisés en tant qu'éléments de roulement (83, 84) avec des faces conjuguées planes et parallèles correspondant aux faces aux extrémités des éléments de blocage (81, 82) peuvent coulisser par conjugaison de formes dans le guidage forcé d'élément de blocage (71, 72).

2. Siège auto enfant avec un dispositif de réglage en hauteur d'un appuie-tête du siège auto enfant pour véhicules automobiles selon la revendication 1, **caractérisé en ce**
**que** les guidages forcés d'élément de blocage (71, 72) des éléments de blocage (81, 82) disposés à l'opposé sont réalisés symétriquement.

3. Siège auto enfant avec un dispositif de réglage en hauteur d'un appuie-tête du siège auto enfant pour véhicules automobiles selon une des revendications 1 ou 2,
**caractérisé en ce**
**que** les éléments de blocage (81, 82) sont réalisés par des boulons.

4. Siège auto enfant avec un dispositif de réglage en hauteur d'un appuie-tête du siège auto enfant pour véhicules automobiles selon une des revendications 1 à 3, **caractérisé en ce**
**qu'**une prise (73) au moyen de laquelle le module de déclenchement (7) peut être tiré vers le haut est prévue à l'extrémité supérieure, tournée vers l'appuie-tête (3), du module de déclenchement (7), ce qui rend mobile la partie de tête (4) conjointement en main avec le module de déclenchement (7) par rapport à la partie inférieure (5) du dossier.
